# EUROPEAN PATENT SPECIFICATION

(11) **EP 3 166 239 B1**
(45) Date of publication and mention of the grant of the patent: **06.11.2019**
(21) Application number: 14895085.0
(22) Date of filing: 30.06.2014
(51) Int. Cl.: H04B 17/30, H04M 9/00

(54) **METHOD AND SYSTEM FOR SCORING HUMAN SOUND VOICE QUALITY**
VERFAHREN UND SYSTEM ZUR BEWERTUNG DER KLANGQUALITÄT EINER MENSCHLICHEN STIMME
PROCÉDÉ ET SYSTÈME D'ÉVALUATION DE LA QUALITÉ SONORE D'UNE VOIX HUMAINE

(30) Priority: 17.06.2014 CN 201410269839
(43) Date of publication of application: 10.05.2017
(73) Proprietor: The Third Research Institute of Ministry of Public Security, Xuhui District Shanghai 200031 (CN); Shanghai Jinghui Electronics Equipment Minhang Co., Ltd., Shanghai 201100 (CN)
(72) Inventor: RONG, Ling, Shanghai 200031 (CN); ZHAO, Peng, Shanghai 201100 (CN); BAO, Yiming, Shanghai 200031 (CN); TANG, Decheng, Shanghai 201100 (CN); HU, Rong, Shanghai 201100 (CN)
(74) Representative: Maikowski & Ninnemann Patentanwälte Partnerschaft mbB
(86) International application number: PCT/CN2014/081156
(87) International publication number: WO 2015/192395

(56) References cited:
- CN-A- 101 645 271
- CN-A- 103 413 558
- CN-A- 103 607 669
- CN-A- 103 607 669
- CN-A- 103 730 131
- US-A1- 2007 027 687
- US-A1- 2007 036 364
- US-A1- 2010 318 635
- US-A1- 2013 315 405
- Wikipedia: "Frequency response", Wikipedia, 23 February 2014 (2014-02-23), XP055457519, Retrieved from the Internet: URL:https://en.wikipedia.org/w/index.php?t itle=Frequency_response&diff=596810426&old id=596809883 [retrieved on 2018-03-08]

## Description

### BACKGROUND

### Technical Field

The present invention is related to voice transmission and detection field, and more particular to a method and system for scoring a human sound voice quality.

### Related Art

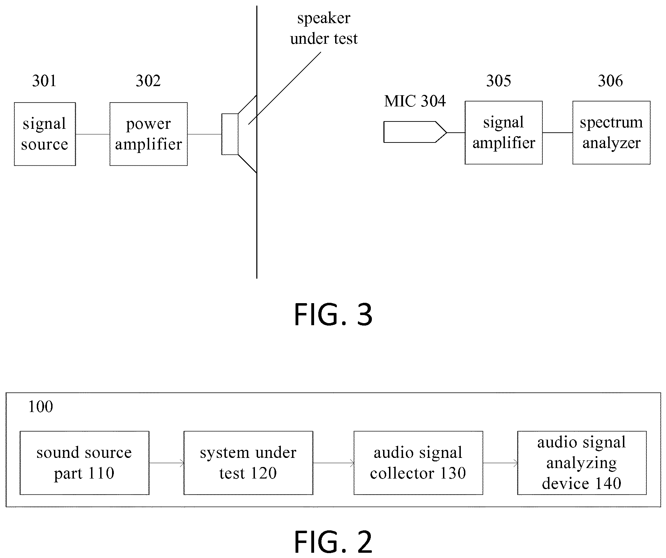

In the prior art, it requires that the detecting (the examining) or the testing of voice transmission and video transmission performance is performed on the device used by voice or video transmission, so as to determines that it conforms the requirements of the indicators. When the result obtained by these detecting or testing conforms with the requirements of the indicators, it may ensure that these voice or video devices are available and easy to use and have a guaranteed quality, so as to performing the producing and practical application for these devices. With the continuous progress of each technique of voice and video transmission device, the performance requirement of the device and each aspect matched with the device when the device is used is also continually updated and progressed. Therefore, for the technique of the device detecting (examining), it is also continually improved, so as to improve the accuracy and precision of the detecting and examining result. The building intercom system used for controlling the residential building entrances is taken as an example, the detecting (examining) or the testing of entire voice frequency transmission property of the used device and system is the most important part for the entire intercom system detecting. The testing method of voice frequency transmission quality of the known building intercom system is a testing method of complete set of sound testing for evaluate the voice transmission quality of the building intercom system product, which includes the testing and calculation of five technical parameters (such as loudness evaluation value, frequency response, distortion, signal to noise ratio, and side tone masking evaluation value). In the existing testing method, the testing of the audio signal of the output end is focused on the evaluation of the technical property of the frequency response, distortion and amplitude property thereof. For example, as shown in FIG. 3, a signal source 301, such as sound source/voice source, generates an audio signal, the audio signal is passed through power amplifying device 302 and voice frequency path of the system under test and outputted by a voice frequency output end (such as speaker or headset under test) 303 of the system under test; the output port of the output end 303 is fixed on a sound insulation baffle, the sound insulation baffle acts as a wall body installed and used for the simulation device, so as to ensure that the testing result is more accurate, a microphone (such as MIC) 304 is configured direct to the direction of the output port, and a central processing unit CPU built-in the microphone 304 collects the output signal and may transform audio signal to an electronic signal; the microphone 304 transmits the electronic signal to the measuring device for measuring through an amplifying device 305 (such as signal amplifier), and the spectrum analyzer 306 output a result, wherein the corresponding technical parameter evaluation performed by the measuring device for the collected output signal includes:
frequency response testing: a frequency of the audio signal source is modulated to a range of 200-4000Hz and a CPU collected value (the voice frequency response signal of the output end) of MIC end is record, so as to obtain the sound pressure (such the strength of the sound, the energy of the sound) effective value of each frequency modulated by the audio signal source, and the calculation (such as Fourier transformation, electronic frequency meter detection and calculation) is performed to obtain the frequency response of the output end (such as speaker);
distortion testing: a frequency of the audio signal source is modulated to a frequency to be test and a CPU collected value of MIC end is record, the spectrum diagram of the collected value signal is obtained through a spectrum transformation (such as Fourier transformation), and a distortion value of the speaker under the signal source input signal frequency corresponding to the signal is calculated through the spectrum diagram;
amplitude property testing: an output margin of the audio signal source is changed in the same frequency and a CPU collected value of MIC end is record, the spectrum of the collected value signal is obtained through a spectrum transformation (such as Fourier transformation), and it views whether the output value under the signal inputting with different margin corresponds to the input value, for example, whether it conform a linear relationship, for example, the input is increased 10db, and the output is also increased 10db.

Further, only based on the above parameters, the degree of restoration thereof is indirectly determined, for example, the smaller the distortion, the flatter the frequency response is (i.e. the variation between the input and the output tends to stable and linear as much as possible), so that the outputted sound is determined as better. The degree of restoration refers to a consistency of the spectrum form of original frame of the signal source input and the spectrum form of the collected frame of the output end, it is an important technical parameter for evaluating the entire performance, in particular to the output performance, of the device and system in the voice frequency measurement. Since the prior art lacks the testing and determination directly performed on the degree of restoration of the output signal of the output end, it causes that the evaluation of the performance, particularly output performance, of the device and system is inaccurate. The existing testing method further includes the following defects: all concerned continuous frequencies may not be tested, so as to cause that the testing result is inaccurate; when the device and system is practically applied, the voice signal practically existed is multi tone point signal (for example, the human voice is a variety of superposition of N frequency points/frequencies); however, the existing distortion testing uses a single frequency point (i.e. 200Hz, 400Hz), it is inconsistent with the distortion situation of the practical multi tone point, so as to cause that the degree of restoration determined by using the distortion of the testing is also inaccurate. Therefore, it would finally cause the detecting result of the existing audio signal being inaccurate or the accuracy is not high, so as to create a larger difference between the testing result and the practical subjective evaluation.

CN 103607669 A discloses a detection method and a detection system for audio frequency transmission characteristics of a building intercom system. The detection method comprises the steps: a sound source portion generates specific voice signals, the specific voice signals taken as input voice signals are input into a detected access, the specific voice signals are transmitted in the detected access, and are output as detected output voice signals; the specific voice signals comprise a P.50 simulation voice signal or a P.501 human voice signal of the international telecommunication union-telecommunication standardization organization (ITU-T); the sound pressure related to the detected output voice signals are detected based on the detected output voice signals, and audio frequency characteristic parameter values are calculated in dependence on the detected sound pressure related to the detected output voice signals in order to determine audio frequency transmission characteristics of the detected access. By improving the measurement of sound sources, backboards and audio frequency distortion, the detection accuracy and the detection result precision of the audio frequency transmission characteristics of the simulation (bus-mode) building intercom system are improved, and the detection result is relatively close to the actual using effect.

US 2013/315405 A1 discloses a sound processor, sound processing method, and discloses the following content: a microphone is a sound input device collecting sound, the audio signals output from the microphone are supplied to the sound processor to perform analog to digital conversion on the audio signals supplied from the microphone. A CPU performs fast fourier transform (FFT) processing on each of the audio data at the proximate position and the audio data at the listening position, and finds a frequency characteristic.

US 2007/036364 A1 discloses sound field compensating apparatus and sound field compensating method. The apparatus includes: a section that generates sound-volume regulating test signal; a driving section that drives a speaker; a microphone that receives the output from the speaker; and a control section that processes an output signal of the microphone and that controls operations of respective sections. The sound-volume regulating test signal is a sum signal representative of the sum of single-frequency sinusoidal wave signals whose frequencies are set to the relationship of an integer ratio. The control section causes the driving section to drive the speaker by using the sound-volume regulating test signal to thereby detect signal levels of frequency components of the sinusoidal wave signals from output signals of the microphone. In accordance with an average value of the signal levels, the control section sets a measuring sound volume when the speaker is driven by using the measuring test signal.

### SUMMARY

Based on the above defect existing in the prior art, the main purpose of the present application is to provide a method and system for scoring a human sound voice quality, so as to improve accuracy and precision for testing the degree of restoration of the audio signal. Further, the entire precision for testing the audio signal performance of the device and system is improved. In order to solve the technical defect in the above prior art, the purpose of the present application is achieved through the following technical scheme.

The present application provides a system for testing the degree of restoration of an audio signal, according to claim 1.

Wherein the audio signal collecting device includes: transforming the collected continuous voice signal to a corresponding digital signal flow, and transmitting the corresponding digital signal flow to the audio signal analyzing device to segment and analyze the signal flow.

Wherein the audio signal analyzing device includes: obtaining the genuine human voice signal as the input voice signal generated by the sound source part; segmenting and dividing the signal flow of the input voice signal in a time interval, so as to divide the signal flow to segments with the identical time interval, each of the voice signal groups which represent the segments comprising one or more voice signals, performing a spectrum transformation on each of the voice signal groups, so as to obtain a corresponding sound feature value after transforming each of the voice signal groups.

Wherein the audio signal analyzing device includes: synchronizing the signal flow of the output voice signal collected from the audio signal collecting device and the signal flow of the input voice signal from the sound source part corresponding to the signal flow of the output voice signal; taking the identical time interval used for segmenting the signal flow of the input voice signal to segment and divide the signal flow of the collected continuous voice signal to segments with the identical time interval, each of the voice signal groups which represent the segments comprising one or more voice signals, performing the spectrum transformation on each of the voice signal groups to obtain a corresponding sound feature value after transforming each of the voice signal groups.

Wherein the audio signal analyzing device includes: extracting a sound feature value corresponding a segment of one voice signal group belonging to the signal flow of the input voice signal, and extracting a sound feature value corresponding to the segment and corresponding to one segment belonging to the signal flow of the output voice signal, and calculating and analyzing contrast score values of the two corresponding segments based on a similarity principle; counting and/or averagely calculating all of the corresponding contract score values of the segments of the voice signal groups belonging to the signal flow of the input voice signal and the signal flow of the corresponding output voice signal to determine the degree of restoration.

The present application further provides a method for scoring a human sound voice quality, according to claim 6.

Wherein the method further includes: obtaining the genuine human voice signal as the input voice signal generated by the sound source part; segmenting and dividing the signal flow of the input voice signal in a time interval, so as to divide the signal flow to segments with the identical time interval, each of the voice signal groups which represent the segments comprising one or more voice signals, performing a spectrum transformation on each of the voice signal groups, so as to obtain a corresponding sound feature value after transforming each of the voice signal groups.

Wherein segmenting and analyzing the signal flow of the collected output voice signal includes: synchronizing the signal flow of the output voice signal collected from the audio signal collecting device and the signal flow of the input voice signal from the sound source part corresponding to the signal flow of the output voice signal; taking the identical time interval used for segmenting the signal flow of the input voice signal to segment and divide the signal flow of the collected continuous voice signal to segments with the identical time interval, each of the voice signal groups which represent the segments comprising one or more voice signals, performing the spectrum transformation on each of the voice signal groups to obtain a corresponding sound feature value after transforming each of the voice signal groups.

Wherein segmenting and analyzing the signal flow of the collected output voice signal to determine the degree of restoration includes: extracting a sound feature value corresponding a segment of one voice signal group belonging to the signal flow of the input voice signal, and extracting a sound feature value corresponding to the segment and corresponding to one segment belonging to the signal flow of the output voice signal, and calculating and analyzing contrast score values of the two corresponding segments based on a similarity principle; counting and/or averagely calculating all of the corresponding contract score values of the segments of the voice signal groups belonging to the signal flow of the input voice signal and the signal flow of the corresponding output voice signal to determine the degree of restoration.

Wherein the method further includes: segmenting the signal flow of the input voice signal and the signal flow of the output voice signal in the identical time interval is taking a time interval 20ms to segment the signal flow to segments of the voice signal groups with one or more voice signals.

### BRIEF DESCRIPTION OF THE DRAWINGS

The above and other exemplary aspects, features and advantages of certain exemplary embodiments of the present invention will be more apparent from the following description taken in conjunction with the accompanying drawings, in which:
FIG. 1 is a structure block diagram of a system for scoring a human sound voice quality according to one embodiment of the present application;
FIG. 2 is a flowchart of a method for scoring a human sound voice quality according to one embodiment of the present application; and
FIG. 3 is a schematic view of one embodiment for measuring some evaluation parameters of an output end in the existing voice frequency transmission quality test.

### DETAILED DESCRIPTION

The main idea of present application is that in the testing, the sound source adopts a human voice as an input voice signal, such that a voice frequency performance of the transmitted voice in the testing may more conform a practical application situation of the device or system under test, so as to detect or test a sound output feature of the system under test (a communication device and a communication system having safe performance requirement, such as a building intercom system) to obtain more accurate and more exact testing result; further, a continuous segmenting process is performed on the continuous audio signal, and the similarities of the continuous audio signal and the human voice signal are compared to obtain the score of the degree of restoration, thereby more accurately and more exactly determining the sound output performance of the system under test.

To make the objects, technical solutions and advantages of the embodiments of the present invention more clearly, the technical solutions of the present invention will be clearly and completely described hereinafter with reference to the embodiments and drawings of the present invention. Apparently, the embodiments described are merely partial embodiments of the present invention, rather than all embodiments. Other embodiments derived by those having ordinary skills in the art on the basis of the embodiments of the present invention without going through creative efforts shall all fall within the protection scope of the present invention.

The following description with reference to the accompanying drawings is provided to explain the exemplary embodiments of the invention. Note that in the case of no conflict, the embodiments of the present invention and the features of the embodiments may be arbitrarily combined with each other.

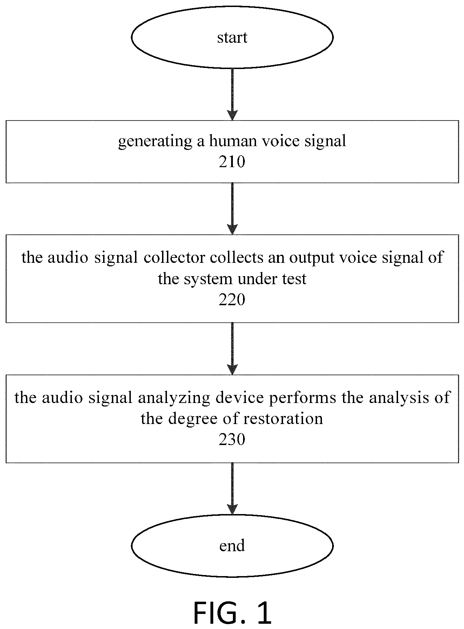

Refers to FIG. 1 showing a structure block diagram of a system for scoring a human sound voice quality according to one embodiment of the present application. In the embodiment, sampling and testing the voice frequency transmission property of a building intercom is taken as an example, the sound output performance of the system under test is determined based on the spectrum analysis of the sampling signal and the analysis of the degree of restoration for the sound source signal. In a detection system 100 of the embodiment, it may primarily include: a sound source part 110, a system under test 120, an audio signal collecting device (collector) 130 and an audio signal analyzing device 140.

The sound source part 110 generates a particular voice signal, the particular voice signal may be a standard human voice, such as a genuine voice signal of ITU Telecommunication Standardization Sector P.501. The voice signal may be as an input voice signal (such as a signal source 301), inputted to an input end of the system under test 120 from the sound source part 110, transmitted in the system under test 120, and be as an output voice signal to be outputted from an output end (such as speaker or handset 303) of the system under test.

In the embodiment, the system under test 120 may be a building intercom system, receives the input voice signal from the sound source part 110, the input voice signal is transmitted through a power amplification device, a path under test, a power amplification device to the output end of the system under test, and the input voice signal passed through by the system under test 120 as an output voice signal is outputted from an output end of the system under test. Wherein the path under test may be a communication path needed to be tested in the system under test (such as the building intercom system under test).

The audio signal collecting device 130 collects the voice signal outputted by the system under test 120, transforms the collected voice signal, and transmits the transformed voice signal to the audio signal analyzing device 140 to process and analyze. For example, a microphone (such as MIC304 is configured on the output end.

The audio signal collecting device 130 may include MIC, power amplifier, audio signal collector and so on.

For example, MIC receives the voice signals which are transmitted by the system under test 120 played by the speaker of the output end of the system under test 120. Specifically, after these continuous voice signals entered from the input end pass through the system under test 120, they acts as outputted continuous voice signals through the output end and received by the MIC; the continuous voice signals are transmitted to the audio signal collector through the power amplifier, and the audio signal collector transmits these collected continuous voice signals to the audio signal analyzing device.

Further, for example, MIC receives the voice signals which are transmitted by the system under test 120 played by the speaker of the output end of the system under test 120. The outputted voice signals may be transformed to electronic signals through MIC and formed as digital signals through the process of A/D transformation performed by the processor, such as CPU, of MIC, and the digital signals corresponding to the voice signals are transmitted to the audio signal analyzing device 140 to perform the process and analysis of the digital signals. Since the input voice signal of the sound source part 110 is continuous and the voice signal outputted by the system under test 120 is also continuous, the continuous digital signal corresponding to the continuous voice signal collected by the audio signal collecting device 130 may be transmitted to the audio signal analyzing device 140.

The audio signal analyzing device 140 receives the continuous voice signal transmitted by the audio signal collector 130, or the corresponding continuous digital signal transformed by the continuous voice signal to process and analyze, so as to determine the degree of restoration of the voice signal.

Specifically, the audio signal analyzing device 140 may include a built-in processor (such as CPU) or a personal computer having analysis and process performance. When receiving the continuous voice signal, CPU transforms the continuous signal to form continuous digital signal or vocal digital signal flow; when receiving the continuous digital signal which has been transformed, the continuous digital signal is the vocal digital signal flow. Here, the digital signal flow corresponding to the continuous voice signal refers to signal flow of the voice signal.

Further, the signal flow of the voice signal is segmented, for example, the signal flow is divided to N "segments" of N "frames" (N is a positive integer greater than or equal to 0). Based on these segments or frames, all collected continuous signals concerned by all tests are processed and analyzed. In one embodiment, based on a principle of Haas effect and considering that human ear does not recognize the order of signal level frequency in a time period of 20 millisecond (ms), a time interval is selected to segment the signal flow, and the time of each segment/frame is 20ms. Further, the spectrum transformation is performed on each segment/frame, the spectrum of the transformed segment/frame and the spectrum (i.e. the corresponding frame spectrum of the input signal flow) of segment corresponding to the signal flow of the voice signal of the input end of original sound source part 110 are compared and analyzed, so as to obtain the testing/detecting result of degree of restoration.

Combined with a flowchart of a method for scoring a human sound voice quality of one embodiment of the present invention shown in FIG. 2, the system and the method thereof for scoring a human sound voice quality is more specifically described as follows.

In step 210, a sound source part 110 generates a particular voice signal, the particular voice signal may be a standard human voice, such as a genuine voice signal of ITU Telecommunication Standardization Sector P.501. The voice signal is a transmission voice signal for testing the voice frequency transmission property of a system under test 120. The voice signal may be as an input voice signal through the sound source part 110, inputted to an input end of the system under test 120, transmitted in the system under test 120, and finally be as an output voice signal to be outputted from an output end of the system under test 120. The human voice signal includes all intermodulation distortions, the human voice signal is adopted as the input signal, it further conforms with the using environment of the system under test and the testing thereof is more accurate and objective. The system under test 120 is, for example, a building intercom system. The specific implementation of this step may refer to the description about the sound source part 110 and the system under test 120 thereof in the system.

In step 220, the human voice signal is collected by the audio signal collecting device 130 through the continuous voice signal outputted by the system under test 120, and sent to the audio signal analyzing device 130 to analyze. The specific implementation of this step may refer to the description about the audio signal collecting device 130 in the system.

In step 230, the audio signal analyzing device 140 segments the collected audio signal (voice signal) and then performed a spectrum transformation, and compares and analyzes the collected audio signal with a particular voice signal generated by the sound source signal, so as to obtain the testing result of the degree of restoration. The specific implementation of this step may refer to the description about the audio signal analyzing device 140 in the system.

In one embodiment, the segmenting process on the audio signal is further described as follows.

Firstly, the processor (CPU) of the audio signal analyzing device 140 segments the digital signal flow corresponding to the continuous voice signal inputted by the digital signal of the standard voice signal, i.e. generated by the sound source part 110 of the input end, wherein each segment is 20ms (i.e. "frame"), and the signal flow is segmented as N voice signal groups (i.e. N frame signals). Wherein each voice signal group (N frame signals) includes one or more voice signals (or referred to signal parameter), N frame signals are, for example, PI, P2, P3, ..., PN, these segmented frames are stored, and each frame, such as PI, consists of digital signal within the time period of 20ms. Further, each frame signal (i.e. the signal flow) is transformed to the corresponding spectrum and the corresponding spectrum is stored. Wherein each frame has corresponding sound feature value after transforming.

Afterward, when the audio signal analyzing device 140 receives the collected signal flow, i.e. receives the signal flow collected from the output end for testing and corresponded to the inputted continuous voice signal, synchronizes the collected signal flow and the input signal flow; similarly, a manner of 20ms of each segment is taken to the signal flow to N voice signal groups, i.e. N frames. Wherein each frame signal, i.e. each voice signal group, includes one or more voice signals (or referred to signal parameter), N frame signals are, for example, p1, p2, p3, ..., pN, these segmented frames are stored, and each frame, such as PI, consists of digital signal within the time interval of 20ms. Further, each frame signal is transformed to a corresponding spectrum and the corresponding spectrum is stored. Wherein each frame has corresponding sound feature value after transforming.

When the voice signal (such as digital signal flow of the voice signal) may achieve the spectrum transformation through Fourier transform or other sound signal processes and obtain the sound feature value of each segment at the same time. Based on the output voice signal corresponding to the input voice signal and transmitted by the system under test 120 and as the same as standard voice signal of the input voice signal, after both are synchronized, the same segmenting and spectrum transformed is performed, so as to obtain sound feature value of each signal group or each frame signal.

Then, these sound feature value, i.e. sound feature values corresponding to each frame in PI, P2, P3, ..., PN and sound feature values corresponding to each frame in p1, p2, p3, ..., pN, are extracted, a sound feature value corresponding a segment of one voice signal group belonging to the signal flow of the input voice signal, based on a manner, such as a similarity principle/similarity calculation, a similarity calculation or a similarity principle analysis is performed on each corresponding frame, i.e. the sound feature values corresponding P1 and the sound feature values corresponding to p1, so as to determine the degree of restoration. For example, the similarity between P1 feature value and p1 feature value is calculated to obtain a similarity value 0-1 (such as similar or 100% similar). In order to clearly determine the analysis result, the value may be multiplied by a multiple, such as 100, and the centesimal grade, such as 0-100 grades, is adopted, so that each frame may obtain one score of comparative analysis.

For example, a matching similarity comparison is performed between the feature values A, B, C, D of P1 and the feature value a, b, c', d of p1, so as to obtain that C is different from c', only three features are similar, and the similarity is 3/4^{∗}100=75 scores.

Alternatively, for example, the feature values of P1 are one dimension array [A, B, C, D], the feature values of p1 are one dimension array [a, b, c, d], the arrangements thereof are one dimension array, and the serial numbers A-D and a-d are arranged from small to large. The arrangement trend and tendency is analyzed as similar/the same according to the similarity principle, so that the spectrum comparative score of P1 and p1 is (1/2+1/2)^{∗}100=100.

Finally, the scores of all frames are determined according to the score of each frame, so as to determine the degree of restoration, i.e. the degree of restoration (and the similar degree of the input) of the output sound to the input sound. For example, the scores of all frames are counted to obtain an average score of the output voice signal, and the average score is the score of degree of restoration of the system under test 120. Further, a gap frame may further exist in the signal flow, since the gap frame does not include the voice information, in order to reduce the interference, the score of the gap frame may be deleted and the score of the frame of effective voice signal is only considered, and then the score of the frame of effective voice signal are counted to obtain the average score of the output signal, wherein the average score is the score of degree of restoration of the system under test 120.

In the scheme of the present application, the sound source signal for testing adopts the human voice in the testing process, so as to ensure that the system under test in a practical work environment during the testing process, and the signal is human voice and the distortion thereof includes all intermodulation distortions. The segmenting and processing on the signal include the testing on the continuous frequency, it conforms the signal situation of the human voice and more adequately shows the sound output property of the system under test. Therefore, the segmenting and testing is directly performed on the continuous signal of the degree of restoration, it may obtain more accurate and more exact testing result of the system and device under test.

It should be noted that the terms "include", "contain", and any variation thereof are intended to cover a non-exclusive inclusion. Therefore, a process, method, object, or device that includes a series of elements not only includes these elements, but also includes other elements not specified expressly, or may include inherent elements of the process, method, object, or device. If no more limitations are made, an element limited by "include a/an ..." does not exclude other same elements existing in the process, the method, the article, or the device which includes the element.

The above descriptions are only embodiments of the present invention, but not to limit the present invention. For the skilled in the art, the present invention may have a variety of modifications and changes. Any modification, the equivalent replacement, or the improvement made within the principle of the present invention should be included within the scope of the claims of the present invention.

## Claims

1. A system for scoring a human sound voice quality, at least comprising:
a sound source part (110), a system under test (120), an audio signal collecting device (130) and an audio signal analyzing device (140);
the system being configured for:
the sound source part (110) generating a human voice signal as an input voice signal, and inputting the input voice signal to the system under test (120) from the sound source part (110);
transmitting the input voice signal in the system under test (120) and outputting the input voice signal as an output voice signal from an output end of the system under test (120);
the audio signal collecting device (130) collecting the continuous output voice signal outputted by the output end, and transmitting the collected output voice signal to the audio signal analyzing device (140); and
the audio signal analyzing device (140) segmenting and analyzing the signal flow of the output voice signal;
wherein, the audio signal analyzing device (140) is further configured for acquiring a spectrum of a segment corresponding to the signal flow of the voice signal of the input end of the sound source part (110);
wherein segmenting and analyzing the signal flow comprises segmenting the signal flow of the output voice signal into at least one segment, performing a spectrum transformation on each segment, and comparing and analyzing a spectrum of the transformed segment and the spectrum of a segment corresponding to the signal flow of the voice signal of the input end of the sound source part (110), so as to obtain a testing/detecting result of a degree of restoration of the output voice signal with respect to the input voice signal;
wherein the degree of restoration is determined based on scores of all of the at least one segment, and, when a gap segment which does not include voice information exists in the at least one segment, a score of the gap segment is deleted and only scores of remaining segments of the at least one segment comprising effective voice signal are considered to determine the degree of restoration.

2. The system according to claim 1, which is **characterized in that**, the audio signal collecting device (130) comprises: transforming the collected continuous voice signal to a corresponding digital signal flow, and transmitting the corresponding digital signal flow to the audio signal analyzing device (140) to segment and analyze the signal flow.

3. The system according to claim 1 or 2, which is **characterized in that**, acquiring a spectrum of a segment corresponding to the signal flow of the voice signal of the input end of the sound source part (110) comprises:
obtaining the human voice signal as the input voice signal generated by the sound source part (110);
segmenting and dividing the signal flow of the input voice signal in a time interval, so as to divide the signal flow to segments with the identical time interval, each of the voice signal groups which represent the segments comprising one or more voice signals, performing a spectrum transformation on each of the voice signal groups, so as to obtain a corresponding sound feature value after transforming each of the voice signal groups.

4. The system according to claim 3, which is **characterized in that**, the audio signal analyzing device (140) is further configured for, before comparing and analyzing a spectrum of the transformed segment and a spectrum of a segment corresponding to the signal flow of the voice signal of the input end of the sound source part:
synchronizing the signal flow of the output voice signal collected from the audio signal collecting device and the signal flow of the input voice signal from the sound source part corresponding to the signal flow of the output voice signal; and
wherein segmenting the signal flow of the output voice signal comprises taking the identical time interval used for segmenting the signal flow of the input voice signal to segment and divide the signal flow of the collected continuous voice signal to segments with the identical time interval, each of the voice signal groups which represent the segments comprising one or more voice signals, and
wherein performing a spectrum transformation on each segment comprises performing the spectrum transformation on each of the voice signal groups to obtain a corresponding sound feature value after transforming each of the voice signal groups.

5. The system according to claim 4, which is **characterized in that** comparing and analyzing a spectrum of the transformed segment and a spectrum of a segment corresponding to the signal flow of the voice signal of the input end of the sound source part (110), so as to obtain a testing/detecting result, comprises:
extracting a sound feature value corresponding a segment of one voice signal group belonging to the signal flow of the input voice signal, and extracting a sound feature value corresponding to the segment and corresponding to one segment belonging to the signal flow of the output voice signal, and calculating and analyzing contrast score values of the two corresponding segments based on a similarity principle; and
counting and/or averagely calculating all of the corresponding contract score values of the segments of the voice signal groups belonging to the signal flow of the input voice signal and the signal flow of the corresponding output voice signal to determine the degree of restoration.

6. A method for scoring a human sound voice quality, **characterized in that**, the method comprises:
a sound source part (110) generating (210) a human voice signal as an input voice signal, and inputting the input voice signal to the system under test (120) from the sound source part (110);
transmitting the input voice signal in the system under test(120) and outputting the input voice signal as an output voice signal from an output end of the system under test (120);
collecting (220) the continuous output voice signal outputted by the output end;
segmenting and analyzing (230) the signal flow of the collected output voice signal;
wherein, the method further comprises: acquiring a spectrum of a segment corresponding to the signal flow of the voice signal of the input end of the sound source part (110);
wherein segmenting and analyzing the signal flow comprises segmenting the signal flow of the output voice signal into at least one segment, performing a spectrum transformation on each segment, and comparing and analyzing a spectrum of the transformed segment and the spectrum of segment corresponding to the signal flow of the voice signal of the input end of the sound source part (110), so as to obtain a testing/detecting result of a degree of restoration of the output voice signal with respect to the input voice signal;
wherein the degree of restoration is determined based on scores of all of the at least one segment, and, when a gap segment which does not include voice information exists in the at least one segment, a score of the gap segment is deleted and only scores of remaining segments of the at least one segment comprising effective voice signal are considered to determine the degree of restoration.

7. The method according to claim 6, which is **characterized in that** acquiring a spectrum of a segment corresponding to the signal flow of the voice signal of the input end of the sound source part (110) comprises:
obtaining the human voice signal as the input voice signal generated by the sound source part;
segmenting and dividing the signal flow of the input voice signal in a time interval, so as to divide the signal flow to segments with the identical time interval, each of the voice signal groups which represent the segments comprising one or more voice signals, performing a spectrum transformation on each of the voice signal groups, so as to obtain a corresponding sound feature value after transforming each of the voice signal groups.

8. The method according to claim 7, which is **characterized in that** the method further comprises, before comparing and analyzing a spectrum of the transformed segment and a spectrum of a segment corresponding to the signal flow of the voice signal of the input end of the sound source part:
synchronizing the signal flow of the output voice signal collected from an audio signal collecting device (130) and the signal flow of the input voice signal from the sound source part (110) corresponding to the signal flow of the output voice signal; and
wherein segmenting the signal flow of the output voice signal comprises taking the identical time interval used for segmenting the signal flow of the input voice signal to segment and divide the signal flow of the collected continuous voice signal to segments with the identical time interval, each of the voice signal groups which represent the segments comprising one or more voice signals, and
wherein performing a spectrum transformation on each segment comprises performing the spectrum transformation on each of the voice signal groups to obtain a corresponding sound feature value after transforming each of the voice signal groups.

9. The method according to claim 8, which is **characterized in that** comparing and analyzing a spectrum of the transformed segment and a spectrum of a segment corresponding to the signal flow of the voice signal of the input end of the sound source part (110), so as to obtain a testing/detecting result, comprises:
extracting a sound feature value corresponding a segment of one voice signal group belonging to the signal flow of the input voice signal, and extracting a sound feature value corresponding to the segment and corresponding to one segment belonging to the signal flow of the output voice signal, and calculating and analyzing contrast score values of the two corresponding segments based on a similarity principle; and
counting and/or averagely calculating all of the corresponding contract score values of the segments of the voice signal groups belonging to the signal flow of the input voice signal and the signal flow of the corresponding output voice signal to determine the degree of restoration.

10. The method according to claim 8, which is **characterized in that**, the method further comprises: segmenting the signal flow of the input voice signal and the signal flow of the output voice signal in the identical time interval is taking a time interval 20ms to segment the signal flow to segments of the voice signal groups with one or more voice signals.

## Patentansprüche

1. System zur Bewertung der Klangqualität einer menschlichen Stimme, mindestens umfassend:
einen Tonquellenteil (110), ein zu testendes System (120), eine Audiosignalerfassungseinrichtung (130) und eine Audiosignalanalyseeinrichtung (140), wobei das System ausgelegt ist zum:
Erzeugen eines menschlichen Sprachsignals als Eingangssprachsignal durch den Tonquellenteil (110) und Eingeben des Eingangssprachsignals aus dem Tonquellenteil (110) in das zu testende System (120) ;
Übertragen des Eingangssprachsignals in das zu testende System (120) und Ausgeben des Eingangssprachsignals als Ausgangssprachsignal aus einem Ausgangsende des zu testenden Systems (120);
Erfassen des kontinuierlichen aus dem Ausgangsende ausgegebenen Sprachsignals durch die Audiosignalerfassungseinrichtung (130) und Übertragen des erfassten Ausgangssprachsignals an die Audiosignalanalyseeinrichtung (140); und
Segmentieren und Analysieren des Signalflusses des Ausgangssprachsignals durch die Audiosignalanalyseeinrichtung (140);
wobei die Audiosignalanalyseeinrichtung (140) ferner zum Erfassen eines Spektrums eines Segments ausgelegt ist, das dem Signalfluss des Sprachsignals des Eingangsendes des Tonquellenteils (110) entspricht;
wobei das Segmentieren und Analysieren des Signalflusses das Segmentieren des Signalflusses des Ausgangssprachsignals in mindestens ein Segment, das Durchführen einer Spektrumstransformation an jedem Segment und das Vergleichen und Analysieren eines Spektrums des transformierten Segments und des Spektrums eines Segments, das dem Signalfluss des Sprachsignals des Eingangsendes des Tonquellenteils (110) entspricht, umfasst, um so ein Test-/Erfassungsergebnis eines Wiederherstellungsgrades des Ausgangssprachsignals in Bezug auf das Eingangssprachsignal zu erhalten;
wobei der Wiederherstellungsgrad basierend auf den Scorewerten aller des mindestens einen Segments bestimmt wird, und, wenn ein Gap-Segment, das keine Sprachinformationen enthält, in dem mindestens einen Segment vorhanden ist, ein Scorewert des Gap-Segments gelöscht wird und nur Scorewerte der verbleibenden Segmente des mindestens einen Segments, das ein effektives Sprachsignal umfasst, betrachtet werden, um den Wiederherstellungsgrad zu bestimmen.

2. System nach Anspruch 1, **dadurch gekennzeichnet, dass** die Audiosignalerfassungseinrichtung (130) umfasst: Transformieren des erfassten kontinuierlichen Sprachsignals in einen entsprechenden digitalen Signalfluss und Übertragen des entsprechenden digitalen Signalflusses an die Audiosignalanalyseeinrichtung (140) zum Segmentieren und Analysieren des Signalflusses.

3. System nach Anspruch 1 oder 2, **dadurch gekennzeichnet, dass** das Erfassen eines Spektrums eines Segments, das dem Signalfluss des Sprachsignals des Eingangsendes des Tonquellenteils (110) entspricht, umfasst:
Erhalten des menschlichen Sprachsignals als das vom Tonquellenteil (110) erzeugte Eingangssprachsignal;
Segmentieren und Unterteilen des Signalflusses des Eingangssprachsignals in ein Zeitintervall, um den Signalfluss in Segmente mit dem gleichen Zeitintervall zu unterteilen, wobei jede der Sprachsignalgruppen, die die Segmente darstellen, ein oder mehrere Sprachsignale umfasst, Durchführen einer Spektrumstransformation an jeder der Sprachsignalgruppen, um nach dem Transformieren jeder der Sprachsignalgruppen einen entsprechenden Klangmerkmalswert zu erhalten.

4. System nach Anspruch 3, **dadurch gekennzeichnet, dass** die Audiosignalanalyseeinrichtung (140) ferner dazu ausgelegt ist, vor dem Vergleichen und Analysieren eines Spektrums des transformierten Segments und eines Spektrums eines Segments, das dem Signalfluss des Sprachsignals des Eingangsendes des Tonquellenteils entspricht:
den Signalfluss des von der Audiosignalerfassungseinrichtung erfassten Ausgangssprachsignals und den Signalfluss des Eingangssprachsignals aus dem Tonquellenteil entsprechend dem Signalfluss des Ausgangssprachsignals zu synchronisieren;
und
wobei das Segmentieren des Signalflusses des Ausgangssprachsignals das Einnehmen des identischen Zeitintervalls umfasst, das zum Segmentieren des Signalflusses des Eingangssprachsignals verwendet wird, um den Signalfluss des erfassten kontinuierlichen Sprachsignals in Segmente mit dem identischen Zeitintervall zu segmentieren und zu unterteilen, wobei jede der Sprachsignalgruppen, die die Segmente darstellen, ein oder mehrere Sprachsignale umfasst, und
wobei das Durchführen einer Spektrumstransformation an jedem Segment das Durchführen der Spektrumstransformation an jeder der Sprachsignalgruppen umfasst, um nach dem Transformieren jeder der Sprachsignalgruppen einen entsprechenden Klangmerkmalswert zu erhalten.

5. System nach Anspruch 4, **dadurch gekennzeichnet, dass** das Vergleichen und Analysieren eines Spektrums des transformierten Segments und eines Spektrums eines Segments, das dem Signalfluss des Sprachsignals des Eingangsendes des Tonquellenteils (110) entspricht, um ein Test-/Erfassungsergebnis zu erhalten, umfasst:
Extrahieren eines Klangmerkmalswertes, der einem Segment einer Sprachsignalgruppe entspricht, die zum Signalfluss des Eingangssprachsignals gehört, und Extrahieren eines Klangmerkmalswertes, der dem Segment entspricht und einem Segment entspricht, das zum Signalfluss des Ausgangssprachsignals gehört, und Berechnen und Analysieren von Kontrastscorewerten der beiden entsprechenden Segmente basierend auf einem Ähnlichkeitsprinzip; und
Zählen und/oder durchschnittliches Berechnen aller entsprechenden Vertragsscorewerte der Segmente der Sprachsignalgruppen, die zum Signalfluss des Eingangssprachsignals und zum Signalfluss des entsprechenden Ausgangssprachsignals gehören, um den Wiederherstellungsgrad zu bestimmen.

6. Verfahren zum Bewerten der Klangqualität einer menschlichen Stimme, **dadurch gekennzeichnet, dass** das Verfahren umfasst:
einen Tonquellenteil (110), der ein menschliches Sprachsignal als Eingangssprachsignal erzeugt (210) und Eingeben des Eingangssprachsignals aus dem Tonquellenteil (110) in das zu testende System (120) ;
Übertragen des Eingangssprachsignals in das zu testende System (120) und Ausgeben des Eingangssprachsignals als Ausgangssprachsignal aus einem Ausgangsende des zu testenden Systems (120);
Erfassen (220) des aus dem Ausgangsende ausgegebenen kontinuierlichen Sprachsignals;
Segmentieren und Analysieren (230) des Signalflusses des erfassten Ausgangssprachsignals;
wobei das Verfahren ferner umfasst: Erfassen eines Spektrums eines Segments, das dem Signalfluss des Sprachsignals des Eingangsendes des Tonquellenteils (110) entspricht;
wobei das Segmentieren und Analysieren des Signalflusses das Segmentieren des Signalflusses des Ausgangssprachsignals in mindestens ein Segment, das Durchführen einer Spektrumstransformation an jedem Segment und das Vergleichen und Analysieren eines Spektrums des transformierten Segments und des Spektrums eines Segments, das dem Signalfluss des Sprachsignals des Eingangsendes des Tonquellenteils (110) entspricht, umfasst, um so ein Test-/Erfassungsergebnis eines Wiederherstellungsgrades des Ausgangssprachsignals in Bezug auf das Eingangssprachsignal zu erhalten;
wobei der Wiederherstellungsgrad basierend auf den Scorewerten aller des mindestens einen Segments bestimmt wird, und, wenn ein Gap-Segment, das keine Sprachinformationen enthält, in dem mindestens einen Segment vorhanden ist, ein Scorewert des Gap-Segments gelöscht wird und nur Scorewerte der verbleibenden Segmente des mindestens einen Segments, das ein effektives Sprachsignal umfasst, betrachtet werden, um den Wiederherstellungsgrad zu bestimmen.

7. Verfahren nach Anspruch 6, **dadurch gekennzeichnet, dass** das Erfassen eines Spektrums eines Segments, das dem Signalfluss des Sprachsignals des Eingangsendes des Tonquellenteils (110) entspricht, umfasst:
Erhalten des menschlichen Sprachsignals als das von dem Tonquellenteil erzeugte Eingangssprachsignal;
Segmentieren und Unterteilen des Signalflusses des Eingangssprachsignals in ein Zeitintervall, um den Signalfluss in Segmente mit dem gleichen Zeitintervall zu unterteilen, wobei jede der Sprachsignalgruppen, die die Segmente darstellen, ein oder mehrere Sprachsignale umfasst, Durchführen einer Spektrumstransformation an jeder der Sprachsignalgruppen, um nach dem Transformieren jeder der Sprachsignalgruppen einen entsprechenden Klangmerkmalswert zu erhalten.

8. Verfahren nach Anspruch 7, **dadurch gekennzeichnet, dass** das Verfahren vor dem Vergleichen und Analysieren eines Spektrums des transformierten Segments und eines Spektrums eines Segments, das dem Signalfluss des Sprachsignals des Eingangsendes des Tonquellenteils entspricht, ferner umfasst:
Synchronisieren den Signalflusses des von einer Audiosignalerfassungseinrichtung (130) erfassten Ausgangssprachsignals und des Signalflusses des Eingangssprachsignals aus dem Tonquellenteil (110) entsprechend dem Signalfluss des Ausgangssprachsignals; und
wobei das Segmentieren des Signalflusses des Ausgangssprachsignals das Einnehmen des identischen Zeitintervalls umfasst, das zum Segmentieren des Signalflusses des Eingangssprachsignals verwendet wird, um den Signalfluss des erfassten kontinuierlichen Sprachsignals in Segmente mit dem identischen Zeitintervall zu segmentieren und zu unterteilen, wobei jede der Sprachsignalgruppen, die die Segmente darstellen, ein oder mehrere Sprachsignale umfasst, und
wobei das Durchführen einer Spektrumstransformation an jedem Segment das Durchführen der Spektrumstransformation an jeder der Sprachsignalgruppen umfasst, um nach dem Transformieren jeder der Sprachsignalgruppen einen entsprechenden Klangmerkmalswert zu erhalten.

9. Verfahren nach Anspruch 8, **dadurch gekennzeichnet, dass** das Vergleichen und Analysieren eines Spektrums des transformierten Segments und eines Spektrums eines Segments, das dem Signalfluss des Sprachsignals des Eingangsendes des Tonquellenteils (110) entspricht, um ein Test-/Erfassungsergebnis zu erhalten, umfasst:
Extrahieren eines Klangmerkmalswertes, der einem Segment einer Sprachsignalgruppe entspricht, die zum Signalfluss des Eingangssprachsignals gehört, und Extrahieren eines Klangmerkmalswertes, der dem Segment entspricht und einem Segment entspricht, das zum Signalfluss des Ausgangssprachsignals gehört, und Berechnen und Analysieren von Kontrastscorewerten der beiden entsprechenden Segmente basierend auf einem Ähnlichkeitsprinzip; und
Zählen und/oder durchschnittliches Berechnen aller entsprechenden Vertragsscorewerte der Segmente der Sprachsignalgruppen, die zum Signalfluss des Eingangssprachsignals und zum Signalfluss des entsprechenden Ausgangssprachsignals gehören, um den Wiederherstellungsgrad zu bestimmen.

10. Verfahren nach Anspruch 8, **dadurch gekennzeichnet, dass** das Verfahren ferner umfasst: dass das Segmentieren des Signalflusses des Eingangssprachsignals und des Signalflusses des Ausgangssprachsignals in dem identischen Zeitintervall ein Zeitintervall von 20 ms benötigt, um den Signalfluss in Segmente der Sprachsignalgruppen mit einem oder mehreren Sprachsignalen zu segmentieren.

## Revendications

1. Système pour évaluer une qualité sonore d'une voix humaine comprenant au moins :
une partie de source sonore (110), un système sous test (120), un dispositif de collecte de signal audio (130) et un dispositif d'analyse de signal audio (140) ; le système étant configuré :
pour que la partie de source sonore (110) génère un signal vocal humain sous la forme d'un signal vocal d'entrée et entre le signal vocal d'entrée dans le système sous test (120) à partir de la partie de source sonore (110) ;
pour transmettre le signal vocal d'entrée dans le système sous test (120) et émettre le signal vocal d'entrée sous la forme d'un signal vocal de sortie à partir d'une extrémité de sortie du système sous test (120) ;
pour que le dispositif de collecte de signal audio (130) collecte le signal vocal de sortie continu émis par l'extrémité de sortie et transmette le signal vocal de sortie collecté au dispositif d'analyse de signal audio (140) ; et
pour que le dispositif d'analyse de signal audio (140) segmente et analyse le flux de signal du signal vocal de sortie ;
dans lequel le dispositif d'analyse de signal audio (140) est en outre configuré pour acquérir un spectre d'un segment correspondant au flux de signal du signal vocal de l'extrémité d'entrée de la partie de source sonore (110) ;
dans lequel la segmentation et l'analyse du flux de signal consiste à segmenter le flux de signal du signal vocal de sortie en au moins un segment, à effectuer une transformation de spectre sur chaque segment et à comparer et à analyser un spectre du segment transformé et le spectre d'un segment correspondant au flux de signal du signal vocal de l'extrémité d'entrée de la partie de source sonore (110) de sorte à obtenir un résultat de test/détection d'un degré de restauration du signal vocal de sortie par rapport au signal vocal d'entrée ;
dans lequel le degré de restauration est déterminé en se basant sur des scores du segment ou de la totalité des segments et, lorsqu'un segment de plage de silence qui ne comporte pas d'informations vocales existe dans le ou les segments, un score du segment de plage de silence est supprimé et seuls les scores des segments restants du ou des segments comprenant un signal vocal effectif sont considérés pour déterminer le degré de restauration.

2. Système selon la revendication 1, qui est **caractérisé en ce que** le dispositif de collecte de signal audio (130) consiste : à transformer le signal vocal continu collecté en un flux de signal numérique correspondant et à transmettre le flux de signal numérique correspondant au dispositif d'analyse de signal audio (140) pour segmenter et analyser le flux de signal.

3. Système selon la revendication 1 ou 2, qui est **caractérisé en ce que** l'acquisition d'un spectre d'un segment correspondant au flux de signal du signal vocal de l'extrémité d'entrée de la partie de source sonore (110) consiste :
à obtenir le signal vocal humain en tant que signal vocal d'entrée généré par la partie de source sonore (110) ;
à segmenter et à diviser le flux de signal du signal vocal d'entrée pendant un intervalle de temps de sorte à diviser le flux de signal en segments avec l'intervalle de temps identique, chacun des groupes de signaux vocaux qui représentent les segments, comprenant un ou plusieurs signaux vocaux, à effectuer une transformation de spectre sur chacun des groupes de signaux vocaux de sorte à obtenir une valeur de caractéristique sonore correspondante après la transformation de chacun des groupes de signaux vocaux.

4. Système selon la revendication 3, qui est **caractérisé en ce que** le dispositif d'analyse de signal audio (140) est en outre configuré, avant de comparer et d'analyser un spectre du segment transformé et un spectre d'un segment correspondant au flux de signal du signal vocal de l'extrémité d'entrée de la partie de source sonore :
pour synchroniser le flux de signal du signal vocal de sortie collecté à partir du dispositif de collecte de signal audio et le flux de signal du signal vocal d'entrée provenant de la partie de source sonore correspondant au flux de signal du signal vocal de sortie ; et
dans lequel la segmentation du flux de signal du signal vocal de sortie consiste à prendre l'intervalle de temps identique utilisé pour segmenter le flux de signal du signal vocal d'entrée pour segmenter et diviser le flux de signal du signal vocal continu collecté en segments avec l'intervalle de temps identique, chacun des groupes de signaux vocaux qui représentent les segments, comprenant un ou plusieurs signaux vocaux, et
dans lequel la réalisation d'une transformation de spectre sur chaque segment consiste à effectuer la transformation de spectre sur chacun des groupes de signaux vocaux pour obtenir une valeur de caractéristique sonore correspondante après la transformation de chacun des groupes de signaux vocaux.

5. Système selon la revendication 4, qui est **caractérisé en ce que** la comparaison et l'analyse d'un spectre du segment transformé et d'un spectre d'un segment correspondant au flux de signal du signal vocal de l'extrémité d'entrée de la partie de source sonore (110) de sorte à obtenir un résultat de test/détection consiste :
à extraire une valeur de caractéristique sonore correspondant à un segment d'un groupe de signaux vocaux appartenant au flux de signal du signal vocal d'entrée et à extraire une valeur de caractéristique sonore correspondant au segment et correspondant à un segment appartenant au flux de signal du signal vocal de sortie et à calculer et à analyser des valeurs de score de contraste des deux segments correspondants en se basant sur un principe de similarité ; et
à compter et/ou à calculer en moyenne la totalité des valeurs de score de contrat correspondantes des segments des groupes de signaux vocaux appartenant au flux de signal du signal vocal d'entrée et au flux de signal du signal vocal de sortie correspondant pour déterminer le degré de restauration.

6. Procédé pour évaluer une qualité sonore d'une voix humaine, **caractérisé en ce que** le procédé consiste :
à générer (210), au moyen d'une partie de source sonore (110), un signal vocal humain sous la forme d'un signal vocal d'entrée et à entrer le signal vocal d'entrée dans le système sous test (120) à partir de la partie de source sonore (110) ;
à transmettre le signal vocal d'entrée dans le système sous test (120) et à émettre le signal vocal d'entrée sous la forme d'un signal vocal de sortie à partir d'une extrémité de sortie du système sous test (120) ;
à collecter (220) le signal vocal de sortie continu émis par l'extrémité de sortie ;
à segmenter et à analyser (230) le flux de signal du signal vocal de sortie collecté ;
dans lequel le procédé consiste en outre : à acquérir un spectre d'un segment correspondant au flux de signal du signal vocal de l'extrémité d'entrée de la partie de source sonore (110) ;
dans lequel la segmentation et l'analyse du flux de signal consiste à segmenter le flux de signal du signal vocal de sortie en au moins un segment, à effectuer une transformation de spectre sur chaque segment et à comparer et à analyser un spectre du segment transformé et le spectre d'un segment correspondant au flux de signal du signal vocal de l'extrémité d'entrée de la partie de source sonore (110) de sorte à obtenir un résultat de test/détection d'un degré de restauration du signal vocal de sortie par rapport au signal vocal d'entrée ;
dans lequel le degré de restauration est déterminé en se basant sur des scores du segment ou de la totalité des segments et, lorsqu'un segment de plage de silence qui ne comporte pas d'informations vocales existe dans le ou les segments, un score du segment de plage de silence est supprimé et seuls les scores des segments restants du ou des segments comprenant un signal vocal effectif sont considérés pour déterminer le degré de restauration.

7. Procédé selon la revendication 6, qui est **caractérisé en ce que** l'acquisition d'un spectre d'un segment correspondant au flux de signal du signal vocal de l'extrémité d'entrée de la partie de source sonore (110) consiste :
à obtenir le signal vocal humain en tant que signal vocal d'entrée généré par la partie de source sonore ;
à segmenter et à diviser le flux de signal du signal vocal d'entrée pendant un intervalle de temps de sorte à diviser le flux de signal en segments avec l'intervalle de temps identique, chacun des groupes de signaux vocaux qui représentent les segments, comprenant un ou plusieurs signaux vocaux, à effectuer une transformation de spectre sur chacun des groupes de signaux vocaux de sorte à obtenir une valeur de caractéristique sonore correspondante après la transformation de chacun des groupes de signaux vocaux.

8. Procédé selon la revendication 7, qui est **caractérisé en ce que** le procédé consiste en outre, avant de comparer et d'analyser un spectre du segment transformé et un spectre d'un segment correspondant au flux de signal du signal vocal de l'extrémité d'entrée de la partie de source sonore :
à synchroniser le flux de signal du signal vocal de sortie collecté à partir du dispositif de collecte de signal audio (130) et le flux de signal du signal vocal d'entrée provenant de la partie de source sonore (110) correspondant au flux de signal du signal vocal de sortie ; et
dans lequel la segmentation du flux de signal du signal vocal de sortie consiste à prendre l'intervalle de temps identique utilisé pour segmenter le flux de signal du signal vocal d'entrée pour segmenter et diviser le flux de signal du signal vocal continu collecté en segments avec l'intervalle de temps identique, chacun des groupes de signaux vocaux qui représentent les segments, comprenant un ou plusieurs signaux vocaux, et
dans lequel la réalisation d'une transformation de spectre sur chaque segment consiste à effectuer la transformation de spectre sur chacun des groupes de signaux vocaux pour obtenir une valeur de caractéristique sonore correspondante après la transformation de chacun des groupes de signaux vocaux.

9. Procédé selon la revendication 8, qui est **caractérisé en ce que** la comparaison et l'analyse d'un spectre du segment transformé et d'un spectre d'un segment correspondant au flux de signal du signal vocal de l'extrémité d'entrée de la partie de source sonore (110) de sorte à obtenir un résultat de test/détection consiste :
à extraire une valeur de caractéristique sonore correspondant à un segment d'un groupe de signaux vocaux appartenant au flux de signal du signal vocal d'entrée et à extraire une valeur de caractéristique sonore correspondant au segment et correspondant à un segment appartenant au flux de signal du signal vocal de sortie et à calculer et à analyser des valeurs de score de contraste des deux segments correspondants en se basant sur un principe de similarité ; et
à compter et/ou à calculer en moyenne la totalité des valeurs de score de contrat correspondantes des segments des groupes de signaux vocaux appartenant au flux de signal du signal vocal d'entrée et au flux de signal du signal vocal de sortie correspondant pour déterminer le degré de restauration.

10. Procédé selon la revendication 8, qui est **caractérisé en ce que** le procédé comprend en outre : la segmentation du flux de signal du signal vocal d'entrée et du flux de signal du signal vocal de sortie pendant l'intervalle de temps identique prend un intervalle de temps de 20 ms pour segmenter le flux de signal en segments des groupes de signaux vocaux avec un ou plusieurs signaux vocaux.
